# EUROPEAN PATENT SPECIFICATION

(11) **EP 3 637 690 B1**
(45) Date of publication and mention of the grant of the patent: **07.06.2023**
(21) Application number: 18828798.1
(22) Date of filing: 05.07.2018
(51) Int. Cl.: H04L 45/64, H04L 45/655, H04L 45/00

(54) **SERVICE CONFIGURATION-DRIVEN FLOW TABLE METHOD AND DEVICE**
VERFAHREN UND VORRICHTUNG FÜR DIENSTKONFIGURATIONSGESTEUERTE FLUSSTABELLE
PROCÉDÉ ET DISPOSITIF DE COMMANDE DE TABLE DE FLUX BASÉE SUR UNE CONFIGURATION DE SERVICE

(30) Priority: 07.07.2017 CN 201710551692
(43) Date of publication of application: 15.04.2020
(73) Proprietor: NANJING ZHONGXINGXIN SOFTWARE COMPANY LIMITED, Yuhuatai District Nanjing Jiangsu 210012 (CN)
(72) Inventor: LI, Zhen, Nanjing Jiangsu 210012 (CN)
(74) Representative: Aipex B.V.
(86) International application number: PCT/CN2018/094701
(87) International publication number: WO 2019/007403

(56) References cited:
- WO-A1-2015/147913
- CN-A- 104 378 309
- CN-A- 106 411 972
- US-A1- 2014 334 492
- US-A1- 2017 041 220
- Onf: "ONF SDN Evolution - TR 535", , 8 September 2016 (2016-09-08), XP055465666, Retrieved from the Internet: URL:https://www.opennetworking.org/wp-cont ent/uploads/2013/05/TR-535_ONF_SDN_Evoluti on.pdf [retrieved on 2018-04-09]
- "OpenFlow Table Type Patterns", ONFTS-017, 15 August 2014 (2014-08-15), pages 1-55, XP055237569, Retrieved from the Internet: URL:https://www.opennetworking.org/images/ stories/downloads/sdn-resources/onf-specif ications/openflow/OpenFlow Table Type Patterns v1.0.pdf [retrieved on 2015-12-18]
- V1 Open Networking Foundation: "OpenFlow (TM) Controller/Switch NDM Synchronization", , 15 August 2014 (2014-08-15), XP055765131, Retrieved from the Internet: URL:https://opennetworking.org/wp-content/ uploads/2013/04/OpenFlow%20Controller-Swit ch%20NDM%20Synchronization%20v1.0.pdf [retrieved on 2021-01-14]

## Description

### TECHNICAL FIELD

The present disclosure relates to, but is not limited to, the field of communication technologies, and particularly relates to a method and a device for driving a flow table by service configuration.

### BACKGROUND

In the existing networks, implementation of traffic control and forwarding depends on network devices in which operating systems and dedicated hardware are integrated, these operating systems and dedicated hardware being tightly coupled with service characteristics and are developed and designed by individual manufacturers.

Software Defined Network, SDN, is a novel network architecture with a design concept of separating a control plane of a network from a data forwarding plane, so as to realize programmable control of underlying hardware through a centralized software platform in the controller, and thus realize flexible allocation of network resources as required. In the SDN network, the network device is only responsible for pure data forwarding, and may adopt general-purpose hardware; meanwhile, the original operating system responsible for control is abstracted into an independent network operating system which is responsible for adapting different service characteristics, and communications among the network operating system, the service characteristics and the hardware device can be realized through programming.

A typical architecture of SDN is divided into three layers, wherein the top layer is an application layer including various different services and applications; a middle control layer is mainly responsible for arranging data plane resources, and maintaining network topology, state information and the like; and the bottom infrastructure layer is responsible for processing, forwarding and state collection of flow table based data. The SDN essentially has three main characteristics: "control and forwarding separation", "device resource virtualization", and "programmable general-purpose hardware and software".

In current SDN technical solutions, the controller plays a very important role. Service model negotiations between the controller and the forwarding device and between the controller and APPs may affect the whole SDN industrial chain. Related discussions are very active now, and many related concepts have been proposed, such as Table Type Pattern (TTP), Negotiable Data-plane Model (NDM), etc. The TTP is first supported by a physical switch when Broadcom Corporation issues a forwarding chip, and is applied to an Openflow network, including multiple aspects such as the life cycle, deployment, operation and the like of the Openflow network development. Specifically, the TTP is a structured behavioral description of a logical switch, and is an abstract switch model. The main reason it defines switch behavior as logic here is that the service is separated from the specific physical switch platform. One TTP represents a flow processing capability of the Openflow logical switch, which is defined according to description of the Openflow protocol, including explanation of flow tables, Openflow messages, and the like. The switch is developed according to this set of rules of TTP, and a controller developer can obtain sufficient information to know which characteristics are supported by the switch, while a switch developer can also learn about the information the switch needs to support.

When an SDN controller manages a Packet Transport Network (PTN) forwarding device supporting a TTP, PTN service configuration delivered from the application layer needs to be converted into TTP flow table configuration by a certain method.

During the process of converting the PTN service configuration into the TTP flow table configuration by a method of the related art, it is found that problems such as low conversion efficiency, and high development and maintenance costs may occur in the conversion from the PTN service configuration to the TTP flow table configuration.

Further relevant technologies are also known from Document "ONF SDN Evolution - TR 535".

### SUMMARY

The present disclosure provides a method and a device for driving a flow table by service configuration.

The invention is set out in the appended set of claims.

In the method and device for driving a flow table by service configuration provided in the embodiments of the disclosure, by introducing a service model, mapping attributes concerned by a flow table of a forwarding device to a service model to complete registration of the flow table on the service model, determining a change in a related object of the service model caused by a change in service configuration, and mapping the change in the related object of the service model to a corresponding flow table and driving the flow table to generate a flow entry, the service configuration and the flow table configuration are isolated, thereby reducing complexity of the flow table configuration, achieving universality of the flow table configuration, and simplifying the configuration and improving configuration efficiency by reducing the configuration complexity; and thereby reducing development and maintenance costs.

### BRIEF DESCRIPTION OF DRAWINGS

Fig. 1 is a flowchart of a data transmission method according to an embodiment of the present disclosure;
Fig. 2 is a flowchart of a data receiving method according to an embodiment of the disclosure;
Fig. 3(a) is a first abstract schematic diagram of a network element service flow according to an embodiment of the present disclosure;
Fig. 3(b) is a second abstract schematic diagram of a network element service flow according to an embodiment of the present disclosure;
Fig. 4 is a schematic diagram of a service flow mapping relationship between a PTN service model and a TTP flow table according to an embodiment of the present disclosure;
Fig. 5(a) is a flowchart of a DSL design for node attributes according to an embodiment of the present disclosure;
Fig. 5(b) is a flowchart of a static DSL design for TTP flow table registration according to an embodiment of the present disclosure;
Fig. 5(c) is a flowchart of a dynamic DSL for TTP flow table registration according to an embodiment of the present disclosure;
Fig. 6(a) is a schematic diagram illustrating a search performed when node attributes change according to an embodiment of the present disclosure; and
Fig. 6(b) is a schematic diagram illustrating a search performed when a node parent-child relationship changes according to an embodiment of the present disclosure.

### DETAILED DESCRIPTION

For clarity and better understanding of the objects, technical solution and advantages of the disclosure, embodiments of the disclosure will now be described in detail in conjunction with the accompanying drawings. It should be noted that the embodiments of the disclosure and features therein may be combined with each other in any manner as long as they are not contradictory.

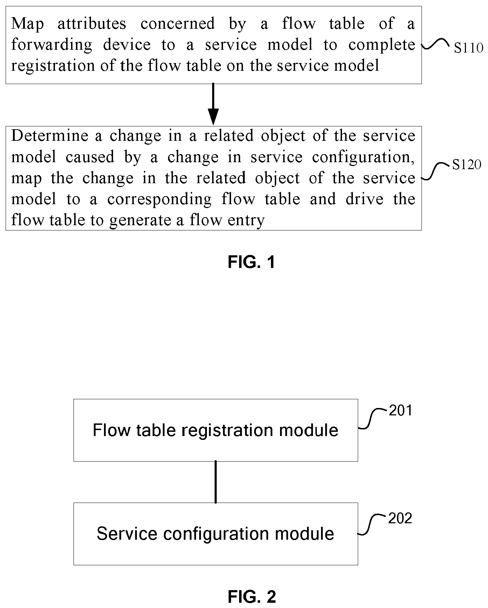

As shown in Fig. 1, in an embodiment of the present disclosure, there is provided a method for driving a flow table by service configuration, including the following steps S110 to S120.

At step S110, mapping attributes concerned by a flow table of a forwarding device to a service model to complete registration of the flow table on the service model.

At step S120, determining a change in a related object of the service model caused by a change in service configuration; and mapping the change in the related object of the service model to a corresponding flow table and driving the flow table to generate a flow entry.

The method may further include the following features:

In an implementation, before mapping attributes concerned by the flow table of the forwarding device to the service model to complete registration of the flow table on the service model, the method further includes: modelling a service to create a service model of the service.

In an implementation, the step of modelling the service to generate the service model of the service includes:
a) abstracting various types of attributes from the service; for example, abstracting attributes of various types of services from the service configuration, or, abstracting attributes of various types of services from the service data flow;
b) describing each type of attribute in the form of metadata; and
c) analyzing the metadata of each type of attribute by a general-purpose program to obtain detail information of the respective types of attribute, and generating attribute classes according to the detail information.

The step of mapping attributes concerned by the flow table of the forwarding device to the service model to complete registration of the flow table on the service model includes:
a) acquiring forwarding capability description files of all forwarding devices;
b) analyzing each forwarding capability description file by a general-purpose program to obtain flow tables and information of attributes concerned by each flow table, and generating registered flow table classes according to the information;
c) recording a correspondence relationship between each forwarding capability description file and the registered flow table classes; and
d) inquiring, after a controller establishes a connection with a certain forwarding device, a corresponding (matched) registered flow table class according to a forwarding capability description file reported by the forwarding device, and acquiring, in a case where a matched registered flow table class is found, the registered flow table class; analyzing, in a case where no matched registered flow table is found, the forwarding capability description file to obtain flow tables and information of attributes concerned by each flow table, and generating registered flow table classes according to the information.

The step d) includes at least one of:
d1) inquiring, after a controller establishes a connection with a certain forwarding device, a corresponding registered flow table class according to a forwarding capability description file reported by the forwarding device, and acquiring, in a case where a matched registered flow table class is found, the registered flow table class;
d2) analyzing, in a case where no matched registered flow table class is found, the forwarding capability description file to obtain flow tables and information of attributes concerned by each flow table, and generating registered flow table classes according to the information.

In an implementation, the forwarding capability description file of the forwarding device is a TTP forwarding capability description file; and the flow table of the forwarding device is a TTP flow table.

In an implementation, the service is PTN service.

In an implementation, the step of determining the change in the related object of the service model caused by the change in service configuration includes:
determining a change in nodes, and/or node attributes, and/or hierarchical relationships between nodes caused on the service model by the change in service configuration.

The step of mapping the change in the related object of the service model to the corresponding flow table and driving the flow table to generate the flow entry includes:
traversing flow tables which have been registered on the service model and are related to the change of the related object on the service model, and generating, after all attributes of a certain registered flow table mapped on the service model are configured, a flow entry of the registered flow table and delivering the flow entry to a forwarding device corresponding to the flow table.

The change caused on the service model by the change in service configuration includes at least one of:
creation of a node, deletion of a node, change of a node, creation of a node attribute, deletion of a node attribute, change of a node attribute, creation of a hierarchical relationship between two nodes, deletion of a hierarchical relationship between two nodes, and change of a hierarchical relationship between two nodes.

As shown in Fig. 2, in an embodiment of the present disclosure, there is provided a device for driving a flow table by service configuration, including:
a flow table registration module 201 configured to map attributes concerned by a flow table of a forwarding device to a service model to complete registration of the flow table on the service model;
a service configuration module 202 configured to determine a change in a related object of the service model caused by a change in service configuration, and map the change in the related object of the service model to a corresponding flow table and drive the flow table to generate a flow entry.

In an implementation, the device further includes:
a service model establishing module configured to model a service to create a service model of the service.

In an implementation, the service model establishing module is configured to model the service to generate the service model of the service by:
abstracting various types of attributes from the service;
describing each type of attribute in the form of metadata; and
analyzing the metadata of each type of attribute to obtain detail information of the respective types of attribute, and generating attribute classes according to the detail information.

The flow table registration module is configured to map attributes concerned by the flow table of the forwarding device to the service model to complete registration of the flow table on the service model by:
acquiring a forwarding capability description file of each forwarding device;
analyzing each forwarding capability description file to obtain flow tables and information of attributes concerned by each flow table, and generating registered flow table classes according to the information;
recording a correspondence relationship between each forwarding capability description file and the registered flow table classes; and
inquiring, after a controller establishes a connection with a certain forwarding device, a corresponding registered flow table class according to a forwarding capability description file reported by the forwarding device, and acquiring, in a case where a matched registered flow table class is found, the registered flow table class; analyzing, in a case where no matched registered flow table class is found, the forwarding capability description file to obtain flow tables and information of attributes concerned by each flow table, and generating registered flow table classes according to the information.

In an implementation, the service configuration module is configured to determine the change in the related object of the service model caused by the change in service configuration by: determining a change in nodes, and/or node attributes, and/or hierarchical relationships between nodes caused on the service model by the change in service configuration.

The service configuration module is configured to map the change in the related object of the service model to the corresponding flow table and driving the flow table to generate the flow entry by: traversing flow tables which have been registered on the service model and are related to the change of the related object on the service model, and generating, after all attributes of a certain registered flow table mapped on the service model are configured, a flow entry of the registered flow table and delivering the flow entry to a forwarding device corresponding to the flow table.

In an implementation, the change caused on the service model by the change in service configuration includes at least one of:
creation of a node, deletion of a node, change of a node, creation of a node attribute, deletion of a node attribute, change of a node attribute, creation of a hierarchical relationship between two nodes, deletion of a hierarchical relationship between two nodes, and change of a hierarchical relationship between two nodes.

In an implementation, the forwarding capability description file of the forwarding device is a TTP forwarding capability description file; and the flow table of the forwarding device is a TTP flow table.

In an implementation, the service is PTN service.

In an embodiment of the present disclosure, there is provided a software-defined network, SDN, controller, including:
a memory, a processor, and a program for driving a flow table by service configuration stored in the memory and executable by the processor, wherein the program, when executed by the processor, causes steps of the method for driving a flow table by service configuration as described in the above embodiments to be implemented.

In an embodiment of the present disclosure, there is provided a computer readable storage medium storing a program for driving a flow table by service configuration, wherein the program, when executed by the processor, causes steps of the method for driving a flow table by service configuration as described in the above embodiments to be implemented.

The technical solution of driving a flow table by service configuration will be explained below in detail from various aspects.

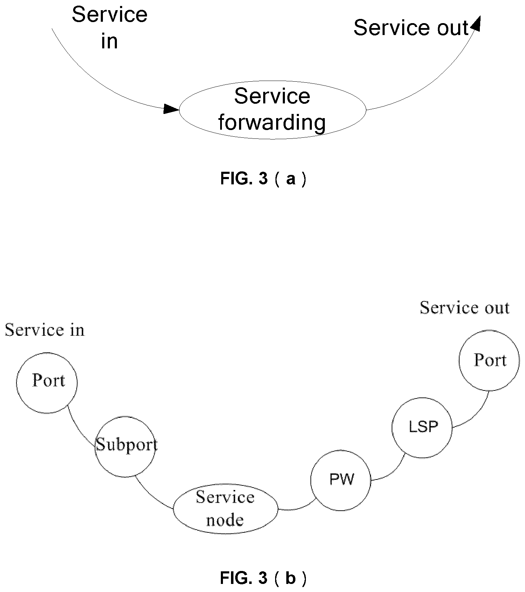

A PTN service model is a domain model established on an abstract layer facing to a PTN forwarding plane, and is a unified abstract description of PTN service forwarding behavior that does not change with changes of the specific forwarding device. For a PTN forwarding device, the essence of its service is forwarding. As shown in Fig. 3(a), an abstraction at a first granularity may be performed on a service flow, the service flow including at least: "service in" and "service out". An abstraction at a second granularity performed on a service flow may be as shown in Fig. 3(b), where a service flow actually contains a plurality of hierarchical relationships, such as port/subport, client layer/service layer, or the like. These hierarchical relationships may be abstracted using parent-child relationships of a tree structure. Here, the second granularity is larger than the first granularity. That is, the abstraction at the first granularity is rougher than the abstraction at the second granularity.

For example, in Fig. 3(b), the subport node has a parent-child relationship with the port node, where the subport node is a child node, and the port node is a parent node. As another example, the Label Switching Path (LSP) node has a parent-child relationship with the Pseudo wire (PW) node, where the LSP node is a child node, and the PW node is a parent node. In the PTN hierarchical relationships described by a tree, a hierarchical relationship may be added at will, which is consistent with the characteristics of the PTN service. A complete path of a tree describes a service flow of the PTN service from ingress to egress. The PTN service can be modeled by using the PTN service model, so as to obtain a service model.

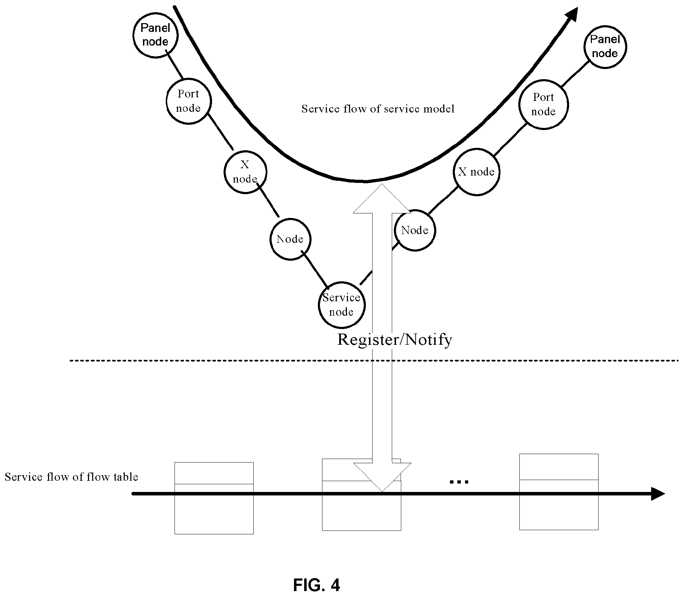

As shown in Fig. 4, the service flow described by way of the PTN service model and the service flow described by way of a flowline composed of TTP flow tables are actually descriptions of the same thing from different points of view. For a PTN service flow, the part above the dotted line in Fig. 4 is described by way of a service path in the PTN service model, and the part below the dotted line is described by way of a flowline composed of a series of TTP flow tables. Both are actually describing the same PTN service flow. Therefore, each TTP flow table below the dashed line represents a segment of the PTN service flow, and the attributes required by each TTP flow table will be mapped to a certain segment of the service path in the PTN service model above the dashed line.

Each TTP flow table only needs to process registration of the attributes concerned by the TTP flow table itself and make an updating upon changes in the attributes. A complete PTN service flow is formed by combining all the TTP flow tables together. Each TTP flow table forms a flow entry to be delivered to a forwarding device to complete configuration of the corresponding service on the forwarding device. The PTN service model may work out a complete service path, i.e., a service flow. For a specific TTP flow table, the concerned attributes are registered to the PTN service model; and then, if a change occurs in the attributes, the PTN service mode will deliver the change in the attributes to the flow table. After all the attributes concerned by the TTP flow table are complete and prepared, a flow entry can be generated and delivered to the forwarding device.

In order to achieve isolation, the PTN service model needs to determine the attributes concerned by the respective flow tables, and registers the attributes to the PTN service model in units of flow tables. Subsequently, when the application layer initiates the PTN service configuration, operations may be directly performed on the PTN service model according to the specific services, where the operations may be standardized as the following changes: creation, deletion, modification of nodes; creation, deletion, modification of attributes on nodes; and changes in relationships of nodes. After sensing these changes, the PTN service model checks, in all possible service flows, whether the attributes concerned by the respective TTP flow tables (registered TTP flow tables) are complete and prepared, and if so, notifies the corresponding flow table to generate a flow entry to be delivered to the forwarding device, so as to complete the service configuration. During this process, the application layer does not sense the existence of the TTP at all, but only needs to know how to configure the service data onto the service model. Then, the service model drives the underlying TTP flow tables to complete the delivery of the flow entry to the forwarding device.

During construction of the PTN service model, the nodes and attributes on the nodes can be abstracted by analyzing the PTN service. The attributes may be described by configuration data of the PTN service. Through an object-oriented design, one attribute may be one class, thus all services of a PTN may generate a large number of attribute classes. Thus, in order to reduce development and maintenance costs, a Domain Specific Language (DSL) design may be performed for the node attributes.

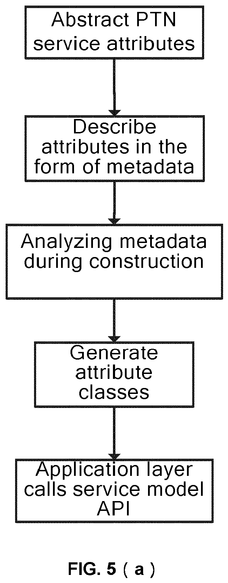

As shown in Fig. 5(a), the DSL design for node attributes may include the following steps:
1) abstracting attribute types from the PTN service;
2) describing each type of attribute in the form of metadata; and
3) analyzing the metadata of each type of attribute by a general-purpose program to obtain detail information of the respective types of attribute, and generating attribute classes according to the detail information.
4) providing each generated attribute class, as an Application Programming Interface (API) of the PTN service model, to the application layer for use.

During construction of the PTN service model, each TTP flow table supported by the forwarding device completes registration to the PTN service model according to the attributes concerned by the TTP flow table itself. Through an object-oriented design, each TTP flow table forms one class, and the class needs to show which attributes in the PTN service model are concerned by the TTP flow table. In order to reduce development and maintenance cost on this part, a DSL design may be made for the TTP flow tables. The DSL design for TTP flow tables may be divided into two scenarios: static DSL and dynamic DSL. The schemes in the two scenarios has some differences, which are described as follows:

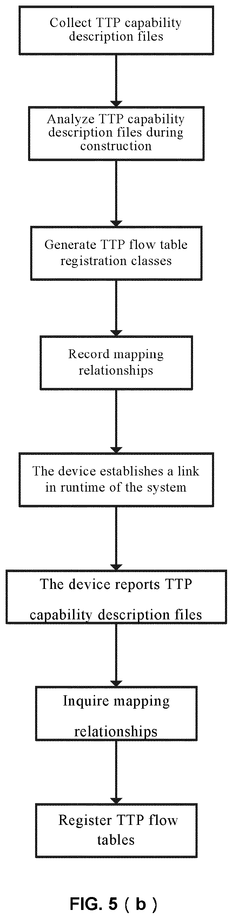

Static DSL is suitable for scenarios where all the forwarding device types are known in advance, with an advantage that DSL cost is not present in runtime, and a disadvantage that the device management capability cannot be extended in runtime. As shown in Fig. 5(b), the static DSL may include the following steps:
1) acquiring TTP capability description files of all forwarding devices; where the TTP capability description file may be a file in the format of JavaScript Object Notation (JSON);
2) analyzing each TTP capability description file by a general-purpose program to obtain the respective TTP flow tables and information of attributes concerned by each TTP flow table, and generating TTP flow table registration classes according to the information;
3) recording a correspondence relationship between each TTP capability description file and the TTP flow table registration classes;
4) reporting, by the forwarding device, the TTP capability description files after the controller establishes connection with the forwarding device in runtime of the system; and
5) inquiring a corresponding TTP flow table registration class according to the TTP capability description files, and registering the TTP flow table registration class to the PTN service model.

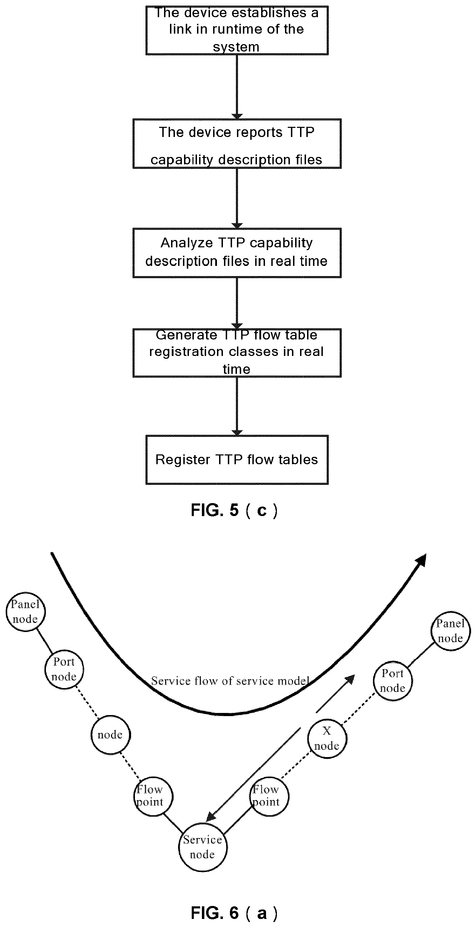

Dynamic DSL is suitable for managing scenarios where the type of the forwarding device is unknown, with an advantage of improving device control capability and a disadvantage that a DSL cost will be present in runtime. As shown in Fig. 5(c), the dynamic DSL may include the following steps:
1) reporting, by the forwarding device, the TTP capability description files after the controller establishes connection with the forwarding device in runtime of the system;
2) analyzing the TTP capability description files in real time to obtain the respective TTP flow tables and information of the attributes concerned by each TTP flow table, and generating TTP flow table registration classes according to the information;
3) registering the TTP flow table registration classes to the PTN service model.

When the application layer operates the PTN service model through an API interface, the PTN service model senses the change of the model, searches the flow table related to the change, and informs the corresponding flow table. Specifically, when a change occurs in the PTN service model, the attributes concerned by the TTP flow table related to the change are searched on each service path. During this search process, if all the attributes concerned by a certain TTP flow table are complete and prepared, the searching is finished, and the corresponding TTP flow table is informed.

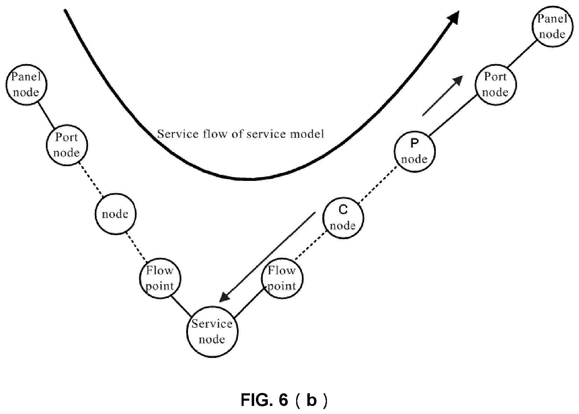

As shown in Fig. 6(a), when the attribute of a node (for example, an X node) on the PTN model service path changes, starting from the X node, all nodes downstream of the X node on the path are searched, and all nodes upstream of the X node on the path are searched. As shown in Fig. 6(b), when the parent-child relationship between two nodes on the PTN model service path changes, for example, a node P is a parent node and a node C is a child node, and when the parent-child relationship between the node P and the node C changes, starting from the node P, all nodes downstream of the node P on the path are searched, and all nodes upstream of the node C on the path are searched.

### Example 1

A method for driving a TTP flow table by a PTN service model is explained taking service configuration of a Virtual Private Wire Service (VPWS) as an example, wherein the DSL design is realized by JAVA language, and the construction tool is Maven.

The whole process of driving the TTP flow table by VPWS service configuration is explained from the following four aspects: building a PTN service model framework, realizing support of the PTN service model to the VPWS service, realizing support of the application layer to the VPWS service configuration, and delivering the VPWS service in runtime.

### (I) Building a PTN service model framework.

The PTN service model framework is based on an object-oriented design and includes the following parts:
1) Determining basic functions:
   Infrastructure classes, such as node classes, attribute base classes, node enumeration, attribute enumeration, tool classes and the like are determined, including determining a PTN service model operation interface and a TTP flow table registration interface, and an algorithm for driving a flow table by a PTN service model realized through coding inside.
2) Determining node attribute DSL metadata:
   An attribute annotation, which is in the format of metadata, is determined, where the carrier of metadata is the node enumeration and the attribute enumeration defined in the basic functions. The attribute annotation is used for describing the attribute of the node ID when used on the node enumeration value, and used for describing common attributes of the node except the ID when used on the attribute enumeration value.
3) Determining a node attribute DSL Maven plug-in:
   After the plug-in sets a running point as compiling, all attribute annotations in the node enumeration and the attribute enumeration are analyzed in runtime, and byte codes of all attribute classes are generated by use of Javassist technology after obtaining the detail information of all attributes.
4) Determining TTP flow table DSL metadata:
   TTP capability description files of all forwarding devices are collected and centrally put in a built directory of the PTN framework.
5) Determining a TTP flow table DSL Maven plug-in:
   After the plug-in sets the running point as compiling, all the TTP capability description files are analyzed in runtime, and byte codes of all the TTP flow table registration classes are generated by use of Javassist technology after obtaining the detail information of all TTP flow tables. Finally, information about which TTP flow table classes are mapped by each TTP capability description file are recorded, and TTP capability mapping classes are generated by use of Javassist technology.

The basic function class, the node attribute DSL metadata and the TTP flow table DSL metadata are planned and integrated in a Maven module, the module could be called PTN service model framework module. During construction and configuration of the PTN service model framework module, a node attribute DSL Maven plug-in and a TTP flow table DSL Maven plug-in are inserted after the compiling stage for operation. After such processing, a Java class generated by the PTN service model framework module upon completion of the construction will include the basic function class and all DSL generated classes, these classes may be all provided, as API, to the application layer for use.

### (II) Realizing support of the PTN service model to the VPWS service.

On the basis of the PTN service model framework, nodes and attributes related to the VPWS service, and a VPWS hierarchical model are determined; then the nodes and the attributes of the VPWS service are added into the node enumeration and the attribute enumeration of the PTN service model framework, and each attribute value is configured by the attribute annotation. With the construction of the PTN service model module, the API of the PTN service model is automatically provided with nodes and attribute classes supporting the VPWS service.

### (III) Realizing support of the application layer to the VPWS service configuration.

The application layer has its own VPWS service command module, which module depends on the PTN service model framework module. For each VPWS service configuration command, a VPWS service configuration command class is created. In a command callback interface of a command class, VPWS configuration data transmitted from the interface is converted into operations performed on the VPWS nodes and attributes in the PTN service model according to a designated VPWS hierarchical model. After compiling, the VPWS service command module is deployed as an independent Jar package.

### (IV) Delivering the VPWS service in runtime.

In runtime of the system, after establishing a link, the forwarding device reports the TTP capability description files, inquires the TTP capability mapping classes to find out all corresponding TTP flow table registration classes, and registers to the PTN service model. The application layer interface delivers a piece of VPWS service configuration and then transfers to a VPWS command processing corresponding to the application layer for processing. The VPWS command converts the VPWS configuration data into operations performed on the VPWS nodes and attributes in the PTN service model. The PTN service model senses a change in itself, and triggers an algorithm for driving a flow table by the PTN service model. The TTP flow table registration class receives a notification indicating that the attributes are complete and prepared, organizes the flow entries and delivers them to the forwarding device.

In the above example, the operation that the application layer initiates the VPWS service configuration and the operation that the underlying forwarding device completes the VPWS flow table configuration are completely decoupled; and from a development perspective, the VPWS service configuration does not sense the TTP flow table configuration. After the PTN service model framework is completed, for a PTN service like VPWS, the development can be completed with only a small amount of work, wherein most codes are generated by the self-defined Maven plug-in, and therefore the development and maintenance costs are low.

It should be noted that the present disclosure may have many other embodiments, and those skilled in the art may make various corresponding changes and variations without departing from the scope of the invention/ method/apparatus as defined in the appended claims.

## Claims

1. A method for driving a flow table by service configuration, comprising:
mapping (S110) attributes required by a flow table of a forwarding device to a service model to complete registration of the flow table on the service model;
determining (S120) a change in a related object of the service model caused by a change in service configuration; and
mapping the change in the related object of the service model to a corresponding flow table and driving the flow table to generate a flow entry;
wherein, the step of mapping attributes required by the flow table of the forwarding device to the service model to complete registration of the flow table on the service model comprises:
acquiring a forwarding capability description file of each forwarding device;
analyzing each forwarding capability description file to obtain flow tables and information of attributes required by each flow table, and generating registered flow table classes according to the information;
recording a correspondence relationship between each forwarding capability description file and the registered flow table classes; and
inquiring, after a controller establishes a connection with a certain forwarding device, a corresponding registered flow table class according to a forwarding capability description file reported by the forwarding device, and acquiring, in a case where a matched registered flow table class is found, the registered flow table class; and/or analyzing, in a case where no matched registered flow table class is found, the forwarding capability description file to obtain flow tables and information of attributes required by each flow table, and generating registered flow table classes according to the information;
**characterized in that**,
the step of mapping the change in the related object of the service model to the corresponding flow table and driving the flow table to generate the flow entry comprises:
traversing flow tables which have been registered on the service model and are related to the change of the related object on the service model, and generating, after all attributes of a certain registered flow table mapped on the service model are configured, a flow entry of the registered flow table and delivering the flow entry to a forwarding device corresponding to the flow table.

2. The method according to claim 1, further comprising:
abstracting various types of attributes from the service;
describing each type of attribute in the form of metadata; and
analyzing the metadata of each type of attribute to obtain detail information of the respective type of attribute, and generating attribute classes according to the detail information.

3. The method according to claim 1, wherein,
the step of determining the change in the related object of the service model caused by the change in service configuration comprises: determining a change in nodes, and/or node attributes, and/or hierarchical relationships between nodes caused on the service model by the change in service configuration, and
wherein the change caused on the service model by the change in service configuration comprises at least one of: creation of a node, deletion of a node, change of a node, creation of a node attribute, deletion of a node attribute, change of a node attribute, creation of a hierarchical relationship between two nodes, deletion of a hierarchical relationship between two nodes, and change of a hierarchical relationship between two nodes.

4. The method according to claim 1, wherein,
the forwarding capability description file of the forwarding device is a Table Type Pattern, TTP, forwarding capability description file; and the flow table of the forwarding device is a TTP flow table.

5. The method according to any one of claims 1 to 4, wherein , the service is Packet Transport Network, PTN, service.

6. A device for driving a flow table by service configuration, comprising:
a flow table registration module (201) configured to map attributes required by a flow table of a forwarding device to a service model to complete registration of the flow table on the service model;
a service configuration module (202) configured to determine a change in a related object of the service model caused by a change in service configuration, and map the change in the related object of the service model to a corresponding flow table and drive the flow table to generate a flow entry;
wherein the flow table registration module (201) is configured to map attributes required by the flow table of the forwarding device to the service model to complete registration of the flow table on the service model by:
acquiring a forwarding capability description file of each forwarding device;
analyzing each forwarding capability description file to obtain flow tables and information of attributes required by each flow table, and generating registered flow table classes according to the information;
recording a correspondence relationship between each forwarding capability description file and the registered flow table classes; and
inquiring, after a controller establishes a connection with a certain forwarding device, a corresponding registered flow table class according to a forwarding capability description file reported by the forwarding device, and acquiring, in a case where a matched registered flow table class is found, the registered flow table class; and/or analyzing, in a case where no matched registered flow table class is found, the forwarding capability description file to obtain flow tables and information of attributes required by each flow table, and generating registered flow table classes according to the information;
**characterized in that**,
the service configuration module (202) is configured to map the change in the related object of the service model to the corresponding flow table and driving the flow table to generate the flow entry by: traversing flow tables which have been registered on the service model and are related to the change of the related object on the service model, and generating, after all attributes of a certain registered flow table mapped on the service model are configured, a flow entry of the registered flow table and delivering the flow entry to a forwarding device corresponding to the flow table.

7. The device according to claim 6, further comprising:
a service model establishing module configured to model a service to create a service model of the service by:
abstracting various types of attributes from the service;
describing each type of attribute in the form of metadata; and
analyzing the metadata of each type of attribute to obtain detail information of the respective type of attribute, and generating attribute classes according to the detail information.

8. The device according to claim 6, wherein
the service configuration module (202) is configured to determine the change in the related object of the service model caused by the change in service configuration by: determining a change in nodes, and/or node attributes, and/or hierarchical relationships between nodes caused on the service model by the change in service configuration, and
wherein the change caused on the service model by the change in service configuration comprises at least one of: creation of a node, deletion of a node, change of a node, creation of a node attribute, deletion of a node attribute, change of a node attribute, creation of a hierarchical relationship between two nodes, deletion of a hierarchical relationship between two nodes, and change of a hierarchical relationship between two nodes.

9. A software-defined network controller, comprising:
a memory, a processor, and a program for driving a flow table by service configuration stored in the memory and executable by the processor, wherein the program, when executed by the processor, causes the method for driving a flow table by service configuration according to any one of claims 1 to 5 to be implemented.

10. A computer readable storage medium storing a program for driving a flow table by service configuration, wherein the program, when executed by a processor, causes the method for driving a flow table by service configuration according to any one of claims 1 to 5 to be implemented.

## Patentansprüche

1. Verfahren zum Treiben einer Ablauftabelle durch Dienstkonfiguration, das Folgendes umfasst:
Abbilden (S110) von Attributen, die von einer Ablauftabelle einer Weiterleitungsvorrichtung benötigt werden, auf ein Dienstmodell, um die Registrierung der Ablauftabelle auf dem Dienstmodell abzuschließen;
Bestimmen (S120) einer Änderung in einem zugehörigen Objekt des Dienstmodells, die von einer Änderung der Dienstkonfiguration verursacht wird; und
Abbilden der Änderung in dem zugehörigen Objekt des Dienstmodells auf eine entsprechende Ablauftabelle und Treiben der Ablauftabelle, um einen Ablaufeintrag zu generieren;
wobei der Schritt des Abbildens von Attributen, die von der Ablauftabelle der Weiterleitungsvorrichtung benötigt werden, auf das Dienstmodell, um die Registrierung der Ablauftabelle auf dem Dienstmodell abzuschließen, Folgendes umfasst:
Erheben einer Weiterleitungsfähigkeits-Beschreibungsdatei jeder Weiterleitungsvorrichtung;
Analysieren jeder Weiterleitungsfähigkeits-Beschreibungsdatei, um Ablauftabellen und Informationen von Attributen zu erhalten, die von jeder Ablauftabelle benötigt werden, und Generieren registrierter Ablauftabellenklassen gemäß den Informationen;
Aufzeichnen einer Entsprechungsbeziehung zwischen jeder Weiterleitungsfähigkeits-Beschreibungsdatei und den registrierten Ablauftabellenklassen; und
Abfragen, nachdem ein Controller eine Verbindung mit einer bestimmten Weiterleitungsvorrichtung hergestellt hat, einer entsprechenden registrierten Ablauftabellenklasse gemäß einer Weiterleitungsfähigkeits-Beschreibungsdatei, die von der Weiterleitungsvorrichtung gemeldet wird, und, in einem Fall, dass eine übereinstimmende registrierte Ablauftabellenklasse gefunden wird, Erheben der registrierten Ablauftabellenklasse; und/oder in einem Fall, dass keine übereinstimmende registrierte Ablauftabellenklasse gefunden wird, Analysieren der Weiterleitungsfähigkeits-Beschreibungsdatei, um Ablauftabellen und Informationen von Attributen zu erhalten, die von jeder Ablauftabelle benötigt werden, und Generieren registrierter Ablauftabellenklassen gemäß den Informationen;
**dadurch gekennzeichnet, dass**
der Schritt des Abbildens der Änderung des zugehörigen Objekts des Dienstmodells auf die entsprechende Ablauftabelle und des Treibens der Ablauftabelle zum Generieren des Ablaufeintrags Folgendes umfasst:
Durchlaufen von Ablauftabellen, die auf dem Servicemodell registriert sind und die Änderung des zugehörigen Objekts auf dem Servicemodell betreffen, und Generieren, nachdem alle Attribute einer bestimmten registrierten Ablauftabelle, die auf dem Servicemodell abgebildet sind, konfiguriert sind, eines Ablaufeintrags der registrierten Ablauftabelle und Liefern des Ablaufeintrags an eine Weiterleitungsvorrichtung, die der Ablauftabelle entspricht.

2. Verfahren nach Anspruch 1, das ferner Folgendes umfasst:
Abstrahieren verschiedener Typen von Attributen aus dem Dienst; Beschreiben jedes Attributtyps in der Form von Metadaten; und
Analysieren der Metadaten jedes Attributtyps, um Detailinformationen des jeweiligen Attributtyps zu erhalten, und Generieren von Attributklassen gemäß den Detailinformationen.

3. Verfahren nach Anspruch 1, wobei
der Schritt des Bestimmens der Änderung des zugehörigen Objekts des Dienstmodells, die von der Änderung der Dienstkonfiguration verursacht wird, Folgendes umfasst: Bestimmen einer Änderung der Knoten und/oder Knotenattribute und/oder der hierarchischen Beziehungen zwischen Knoten, die an dem Dienstmodell von der Änderung der Dienstkonfiguration verursacht werden, und
wobei die Änderung, die an dem Dienstmodell von der Änderung der Dienstkonfiguration verursacht wird, mindestens eines umfasst von: Anlegen eines Knotens, Löschen eines Knotens, Ändern eines Knotens, Anlegen eines Knotenattributs, Löschen eines Knotenattributs, Ändern eines Knotenattributs, Anlegen einer hierarchischen Beziehung zwischen zwei Knoten, Löschen einer hierarchischen Beziehung zwischen zwei Knoten und Ändern einer hierarchischen Beziehung zwischen zwei Knoten

4. Verfahren nach Anspruch 1, wobei
die Weiterleitungsfähigkeits-Beschreibungsdatei der Weiterleitungsvorrichtung eine Tabellentypmuster-Weiterleitungsfähigkeits-Beschreibungsdatei (TTP-Weiterleitungsfähigkeits-Beschreibungsdatei) ist; und die Ablauftabelle der Weiterleitungsvorrichtung eine TTP-Ablauftabelle ist.

5. Verfahren nach einem der Ansprüche 1 bis 4, wobei
der Dienst ein Packet-Transport-Network-Dienst, PTN-Dienst, ist.

6. Vorrichtung zum Treiben einer Ablauftabelle durch Dienstkonfiguration, die Folgendes umfasst:
ein Ablauftabellenregistrierungsmodul (201), das konfiguriert ist, um Attribute, die von einer Ablauftabelle einer Weiterleitungsvorrichtung benötigt werden, auf ein Dienstmodell abzubilden, um die Registrierung der Ablauftabelle auf dem Dienstmodell abzuschließen;
ein Dienstkonfigurationsmodul (202), das konfiguriert ist, um eine Änderung in einem zugehörigen Objekt des Dienstmodells zu bestimmen, die von einer Änderung der Dienstkonfiguration verursacht wird, und die Änderung des zugehörigen Objekts des Dienstmodells auf eine entsprechende Ablauftabelle abzubilden und die Ablauftabelle zu treiben, um einen Ablaufeintrag zu erzeugen;
wobei das Ablauftabellenregistrierungsmodul (201) konfiguriert ist, um Attribute, die von einer Ablauftabelle einer Weiterleitungsvorrichtung benötigt werden, auf das Dienstmodell abzubilden, um die Registrierung der Ablauftabelle auf dem Dienstmodell abzuschließen durch:
Erheben einer Weiterleitungsfähigkeits-Beschreibungsdatei jeder Weiterleitungsvorrichtung;
Analysieren jeder Weiterleitungsfähigkeits-Beschreibungsdatei, um Ablauftabellen und Informationen von Attributen zu erhalten, die von jeder Ablauftabelle benötigt werden, und Generieren registrierter Ablauftabellenklassen gemäß den Informationen;
Aufzeichnen einer Entsprechungsbeziehung zwischen jeder Weiterleitungsfähigkeits-Beschreibungsdatei und den registrierten Ablauftabellenklassen; und
Abfragen, nachdem ein Controller eine Verbindung mit einer bestimmten Weiterleitungsvorrichtung hergestellt hat, einer entsprechenden registrierten Ablauftabellenklasse gemäß einer Weiterleitungsfähigkeits-Beschreibungsdatei, die von der Weiterleitungsvorrichtung gemeldet wird, und, in einem Fall, dass eine übereinstimmende registrierte Ablauftabellenklasse gefunden wird, Erheben der registrierten Ablauftabellenklasse; und/oder in einem Fall, dass keine übereinstimmende registrierte Ablauftabellenklasse gefunden wird, Analysieren der Weiterleitungsfähigkeits-Beschreibungsdatei, um Ablauftabellen und Informationen von Attributen zu erhalten, die von jeder Ablauftabelle benötigt werden, und Generieren registrierter Ablauftabellenklassen gemäß den Informationen;
**dadurch gekennzeichnet, dass**
das Dienstkonfigurationsmodul (202) konfiguriert ist, um die Änderung des zugehörigen Objekts des Dienstmodells auf die entsprechende Ablauftabelle abzubilden und die Ablauftabelle zu treiben, um den Ablaufeintrag zu generieren durch: Durchlaufen von Ablauftabellen, die auf dem Dienstmodell registriert sind und die Änderung des zugehörigen Objekts auf dem Dienstmodell betreffen, und, nachdem alle Attribute einer bestimmten registrierten Ablauftabelle, die auf das Dienstmodell abgebildet ist, konfiguriert sind, Generieren eines Ablaufeintrags der registrierten Ablauftabelle und Liefern des Ablaufeintrags an eine Weiterleitungsvorrichtung, die der Ablauftabelle entspricht.

7. Vorrichtung nach Anspruch 6, die ferner Folgendes umfasst:
ein Dienstmodellerstellungsmodul, das konfiguriert ist, um einen Dienst zu modellieren, um ein Dienstmodell des Dienstes anzulegen durch:
Abstrahieren verschiedener Typen von Attributen aus dem Dienst; Beschreiben jedes Attributtyps in der Form von Metadaten; und
Analysieren der Metadaten jedes Attributtyps, um Detailinformationen des jeweiligen Attributtyps zu erhalten, und Generieren von Attributklassen gemäß den Detailinformationen.

8. Vorrichtung nach Anspruch 6, wobei
das Dienstkonfigurationsmodul (202) konfiguriert ist, um die Änderung des zugehörigen Objekts des Dienstmodells, die von der Änderung der Servicekonfiguration verursacht wird, zu bestimmen durch: Bestimmen einer Änderung von Knoten und/oder Knotenattributen und/oder der hierarchischen Beziehungen zwischen Knoten, die an dem Dienstmodell von der Änderung der Dienstkonfiguration verursacht werden, und
wobei die Änderung, die an dem Dienstmodell von der Änderung der Dienstkonfiguration verursacht wird, mindestens eines umfasst von: Anlegen eines Knotens, Löschen eines Knotens, Ändern eines Knotens, Anlegen eines Knotenattributs, Löschen eines Knotenattributs, Ändern eines Knotenattributs, Anlegen einer hierarchischen Beziehung zwischen zwei Knoten, Löschen einer hierarchischen Beziehung zwischen zwei Knoten und Ändern einer hierarchischen Beziehung zwischen zwei Knoten.

9. Softwaredefinierter Netzwerkcontroller, der Folgendes umfasst:
einen Speicher, einen Prozessor und ein Programm zum Treiben einer Ablauftabelle durch Dienstkonfiguration, die in dem Speicher gespeichert und von dem Prozessor ausführbar ist, wobei das Programm, wenn es von dem Prozessor ausgeführt wird, das Implementieren des Verfahrens zum Treiben einer Ablauftabelle durch Dienstkonfiguration gemäß einem der Ansprüche 1 bis 5 veranlasst.

10. Computerlesbares Speichermedium, das ein Programm zum Treiben einer Ablauftabelle durch Dienstkonfiguration speichert, wobei das Programm, wenn es von einem Prozessor ausgeführt wird, veranlasst, dass das Verfahren zum Treiben einer Ablauftabelle durch Dienstkonfiguration nach einem der Ansprüche 1 bis 5 implementiert wird.

## Revendications

1. Procédé de pilotage d'une table de flux par configuration de service, comprenant :
le mappage (S110) d'attributs requis par une table de flux d'un dispositif de transfert vers un modèle de service pour achever l'enregistrement de la table de flux sur le modèle de service ;
la détermination (S120) d'un changement dans un objet associé du modèle de service causé par un changement dans la configuration de service ; et
le mappage du changement dans l'objet associé du modèle de service vers une table de flux correspondante et le pilotage de la table de flux pour générer une entrée de flux ;
dans lequel, l'étape de mappage d'attributs requis par la table de flux du dispositif de transfert vers le modèle de service pour achever l'enregistrement de la table de flux sur le modèle de service comprend :
l'acquisition d'un fichier de description de capacité de transfert de chaque dispositif de transfert ;
l'analyse de chaque fichier de description de capacité de transfert pour obtenir des tables de flux et des informations d'attributs requises par chaque table de flux, et la génération de classes de table de flux enregistrées selon les informations ;
l'enregistrement d'une relation de correspondance entre chaque fichier de description de capacité de transfert et les classes de table de flux enregistrées ; et
la demande, après qu'un dispositif de commande a établi une connexion avec un certain dispositif de transfert, d'une classe de table de flux enregistrée correspondante selon un fichier de description de capacité de transfert signalé par le dispositif de transfert, et l'acquisition, dans le cas où une classe de table de flux enregistrée correspondante est trouvée, de la classe de table de flux enregistrée ; et/ou l'analyse, dans le cas où aucune classe de table de flux enregistrée correspondante n'est trouvée, du fichier de description de capacité de transfert pour obtenir des tables de flux et des informations d'attribut requises par chaque table de flux, et la génération de classes de table de flux enregistrées selon les informations ;
**caractérisé en ce que**,
l'étape de mappage du changement dans l'objet associé du modèle de service à la table de flux correspondante et de pilotage de la table de flux pour générer l'entrée de flux comprend :
le parcours de tables de flux qui ont été enregistrées sur le modèle de service et sont liées au changement de l'objet associé sur le modèle de service, et la génération, après que tous les attributs d'une certaine table de flux enregistrée mappée sur le modèle de service sont configurés, d'une entrée de flux de la table de flux enregistrée et la fourniture de l'entrée de flux à un dispositif de transfert correspondant à la table de flux.

2. Procédé selon la revendication 1, comprenant en outre :
l'abstraction de divers types d'attributs du service ;
la description de chaque type d'attribut sous forme de métadonnées ; et
l'analyse des métadonnées de chaque type d'attribut pour obtenir des informations détaillées du type respectif d'attribut, et la génération de classes d'attribut selon les informations détaillées.

3. Procédé selon la revendication 1, dans lequel,
l'étape de détermination du changement dans l'objet associé du modèle de service causé par le changement dans la configuration de service comprend : la détermination d'un changement dans les noeuds, et/ou les attributs de noeud, et/ou les relations hiérarchiques entre les noeuds causé sur le modèle de service par le changement dans la configuration du service, et
dans lequel le changement causé sur le modèle de service par le changement dans la configuration de service comprend au moins l'un parmi : la création d'un noeud, la suppression d'un noeud, le changement d'un noeud, la création d'un attribut de noeud, la suppression d'un attribut de noeud, le changement d'un attribut de noeud, la création d'une relation hiérarchique entre deux noeuds, la suppression d'une relation hiérarchique entre deux noeuds et le changement d'une relation hiérarchique entre deux noeuds.

4. Procédé selon la revendication 1, dans lequel,
le fichier de description de capacité de transfert du dispositif de transfert est un fichier de description de capacité de transfert de modèle de type de table, TTP ; et la table de flux du dispositif de transfert est une table de flux TTP.

5. Procédé selon l'une quelconque des revendications 1 et 4, dans lequel,
le service est le service Packet Transport Network, PTN.

6. Dispositif de pilotage d'une table de flux par configuration de service, comprenant :
un module d'enregistrement de table de flux (201) configuré pour mapper des attributs requis par une table de flux d'un dispositif de transfert vers un modèle de service pour achever l'enregistrement de la table de flux sur le modèle de service ;
un module de configuration de service (202) configuré pour déterminer un changement dans un objet associé du modèle de service causé par un changement dans la configuration de service, et mapper le changement dans l'objet associé du modèle de service vers une table de flux correspondante et piloter la table de flux pour générer une entrée de flux ;
dans lequel le module d'enregistrement de table de flux (201) est configuré pour mapper des attributs requis par la table de flux du dispositif de transfert vers le modèle de service pour achever l'enregistrement de la table de flux sur le modèle de service :
en acquérant un fichier de description de capacité de transfert de chaque dispositif de transfert ;
en analysant chaque fichier de description de capacité de transfert pour obtenir des tables de flux et des informations d'attributs requises par chaque table de flux, et en générant des classes de table de flux enregistrées selon les informations ;
en enregistrant une relation de correspondance entre chaque fichier de description de capacité de transfert et les classes de table de flux enregistrées ; et
en demandant, après qu'un dispositif de commande a établi une connexion avec un certain dispositif de transfert, une classe de table de flux enregistrée correspondante selon un fichier de description de capacité de transfert signalé par le dispositif de transfert, et en acquérant, dans le cas où une classe de table de flux enregistrée correspondante est trouvée, la classe de table de flux enregistrée ; et/ou en analysant, dans le cas où aucune classe de table de flux enregistrée correspondante n'est trouvée, le fichier de description de capacité de transfert pour obtenir des tables de flux et des informations d'attribut requises par chaque table de flux, et en générant des classes de table de flux enregistrées selon les informations ;
**caractérisé en ce que**,
le module de configuration de service (202) est configuré pour mapper le changement dans l'objet associé du modèle de service vers la table de flux correspondante et piloter la table de flux pour générer l'entrée de flux : en parcourant les tables de flux qui ont été enregistrées sur le modèle de service et sont liées au changement de l'objet associé sur le modèle de service, et en générant, après que tous les attributs d'une certaine table de flux enregistrée mappée sur le modèle de service sont configurés, une entrée de flux de la table de flux enregistrée et en fournissant l'entrée de flux à un dispositif de transfert correspondant à la table de flux.

7. Dispositif selon la revendication 6, comprenant en outre :
un module d'établissement de modèle de service configuré pour modéliser un service afin de créer un modèle de service du service par :
l'abstraction de divers types d'attributs du service ;
la description de chaque type d'attribut sous forme de métadonnées ; et
l'analyse des métadonnées de chaque type d'attribut pour obtenir des informations détaillées du type respectif d'attribut, et la génération de classes d'attribut selon les informations détaillées.

8. Dispositif selon la revendication 6, dans lequel le module de configuration de service (202) est configuré pour déterminer le changement dans l'objet associé du modèle de service causé par le changement dans la configuration de service par : la détermination d'un changement dans les noeuds, et/ou les attributs de noeud, et/ou les relations hiérarchiques entre les noeuds causé sur le modèle de service par le changement dans la configuration de service, et
dans lequel le changement causé sur le modèle de service par le changement dans la configuration de service comprend au moins l'un parmi : la création d'un noeud, la suppression d'un noeud, le changement d'un noeud, la création d'un attribut de noeud, la suppression d'un attribut de noeud, le changement d'un attribut de noeud, la création d'une relation hiérarchique entre deux noeuds, la suppression d'une relation hiérarchique entre deux noeuds et le changement d'une relation hiérarchique entre deux noeuds.

9. Dispositif de commande de réseau défini par logiciel, comprenant :
une mémoire, un processeur et un programme pour piloter une table de flux par configuration de service stockée dans la mémoire et exécutable par le processeur, dans lequel le programme, lorsqu'il est exécuté par le processeur, entraîne la mise en œuvre du procédé de pilotage d'une table de flux par configuration de service selon l'une quelconque des revendications 1 à 5.

10. Support de stockage lisible par ordinateur stockant un programme pour piloter une table de flux par configuration de service, dans lequel le programme, lorsqu'il est exécuté par un processeur, entraîne la mise en œuvre du procédé de pilotage d'une table de flux par configuration de service selon l'une quelconque des revendications 1 à 5.
